# EUROPEAN PATENT SPECIFICATION

(11) **EP 1 582 043 B1**
(45) Date of publication and mention of the grant of the patent: **31.12.2008**
(21) Application number: 03775735.8
(22) Date of filing: 05.12.2003
(51) Int. Cl.: H04L 29/06

(54) **USER ACCESS CONTROL TO A SERVER CONTENT FROM AN INFORMATION CARRIER PLAYER**
ANWENDERZUGRIFFSKONTROLLE ZU SERVERINHALTEN VON EINEM INFORMATIONSTRÄGERSPIELER
RESTRICTION DE L'ACCES D'UTILISATEURS A UN CONTENU DE SERVEUR A PARTIR D'UN LECTEUR DE SUPPORT D'INFORMATIONS

(30) Priority: 30.12.2002 EP 02293265
(43) Date of publication of application: 05.10.2005
(73) Proprietor: Koninklijke Philips Electronics N.V., 5621 BA Eindhoven (NL)
(72) Inventor: KELLY, Declan Patrick, Société Civile SPID, F-75008 Paris (FR); PENG, Yang, Société Civile SPID, F-75008 Paris (FR)
(74) Representative: van Oudheusden-Perset, Laure E.
(86) International application number: PCT/IB2003/005821
(87) International publication number: WO 2004/059941

(56) References cited:
- WO-A-00/05715
- WO-A-02/03167
- PLANETWEB: "Parental Control White Paper" PLANETWEB:PRODUCTS-PARENTAL CONTROL, [Online] 1 August 2001 (2001-08-01), XP002274172 Retrieved from the Internet: <URL:http://www.planetweb.com/products/web /pcwhitepaper.html> [retrieved on 2004-03-19]
- DIGITAL GAME DEVELOPER: "Planetweb's Parental Control Solution Now Available for Video Games Systems" DIGITAL GAME DEVELOPER, 16 December 1999 (1999-12-16), XP002274173
- PLANETWEB: "Parental Control White Paper" PLANETWEB, [Online] 3 August 2001 (2001-08-03), Retrieved from the Internet: URL:http://web.archive.org/web/20010803184 815/http://www.planetweb.com/products/web/ pcwhitepaper.html>
- INTERNET ARCHIVE: "Parental Control White Paper"[Online] 25 May 2007 (2007-05-25), Retrieved from the Internet: URL:http://web.archive.org/web/*/http://ww w.planetweb.com/products/web/pcwhitepaper. html>

## Description

### FIELD OF THE INVENTION

The invention relates to a method of controlling a user access to a server content from an information carrier player comprising a parental control access.

The invention applies to information carrier players implementing a parental control level feature, such as DVD players.

### BACKGROUND OF THE INVENTION

The DVD Forum has established a working group AH1-12 to standardize Web connected DVD, known as WebDVD. These new specifications are an extension of current DVD-Video specifications. They describe that DVD-Video discs compliant with these new specifications will be published with links to specific Websites containing additional content directly related to the content of the DVD disc being played. These specific Websites may include new navigation menus and content, which the player can download and use instead of original menus provided by the DVD disc.

Players supporting WebDVD comprise communication means for connecting to Web servers which contain said additional content. Advantageously, such communication means can also be used to access any other general Websites for general Web browsing.

In parallel, DVD players nowadays include a parental control feature. The purpose of this feature is to disable the playing of DVD discs that are deemed unsuitable for children. To this end, some DVDs are encoded with a specific parental control level. If the parental control level of the disc is higher than the parental control level of the DVD player (set by parents in using a PIN code), the player will not play the disc. This feature allows parents to limit the type of DVD content that can be played on the player.

In DVD players implementing such a parental control level feature, this feature is limitative and no longer relevant since it cannot restrict or control the access to general Websites deemed unsuitable for children.

Document WO00/05715 describes a digital video apparatus having parental control, similar to the DVD system described above. An information carrier has an associated parental control level. The video apparatus has a setting for the parental control level that it is allowed to play. An option to override the standard level of parental control "on-the-fly" is described.

Document WO02/03167 describes a system and method for providing multiple levels of access to computer network content. The particular websites that can be accessed are controlled by a browser, for example based on a certain top level domain name. Accessing may be controlled based on levels of parental supervision. A prior filtering system is mentioned. The filtering scheme involves limiting access to a certain list of pre-approved sites. A software module in the operating system of a user's machine verifies that each uniform resource locator entered in the browser is one that is on the list of pre-approved sites. Furthermore limiting access based on a user profile containing the age of a user is mentioned. Thereto the profile is sent to the server, which controls the access based on the profile.

Document PLANETWEB: "Parental Control White Paper" [online] 3 August 2001 describes parental control when accessing a server via a network like internet. A white list of approved and rated websites is maintained by a third party. When a child attempts to enter a website, the site is compared against the white list and a child's profile and access is granted or denied. Unrated sites are sent to the third party reviewers. The child's profile comprises 13 customizable filters that correspond to areas of parents' concern. Parents can select any or all of the categories and set them at two to five levels of control, depending on the category. A DVD player is mentioned as an example of a device that enables people to access the internet.

### OBJECT AND SUMMARY OF THE INVENTION

It is an object of the invention to propose a first and a second method of controlling a user access to a server content from an information carrier player comprising a parental control access.

According to the invention the object is achieved with a method as defined in claims 1 or 5, an information carrier player as defined in claims 4 or 6, and a computer program as defined in claims 7 or 8.

The methods of controlling according to the invention take advantage of the existing parental control access used in information carrier players. Such a control access is based on a parental control level selected from among a set of parental control levels.

The association of server addresses lists with each parental control level allows access to Websites whose content fits with the parental control access currently set in the player.

This method can easily be implemented in existing DVD players having a parental control level feature.

According to an additional characteristic, the method of controlling comprises a first control sub-step for deactivating said control step.

This control sub-step enables the user to access any server address.

According to an additional characteristic, the method of controlling comprises a second control sub-step for forbidding the user access to any server address.

If the current parental control level of the player is lower than the highest parental control level, it is concluded that children are probably using the player. In that case it can be decided to block the user access to any server addresses.

Such information carrier players improve the user access control features of existing information carrier players since an access control for general Web browsing is performed. Such an information carrier player may correspond to a DVD player.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner :
Fig.1 depicts a first mehtod according to the invention of controlling a user access to a server content,
Fig.2 depicts a second method according to the invention of controlling a user access to a server content.

### DETAILED DESCRIPTION OF THE INVENTION

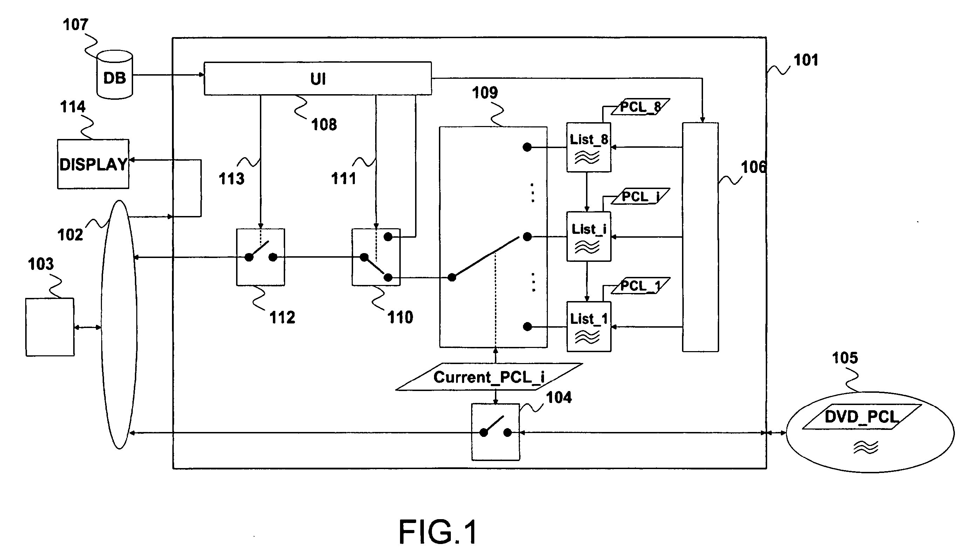

Fig.1 depicts a first method according to the invention of controlling a user access to a server content. This Figure shows an information carrier player 101 communicating via a network 102 with a server 103. For example, it describes a DVD player 101 communicating via the Internet network 102 with a distant Website 103.

The player 101 comprises a parental control access step 104 based on the Motion Picture Association of America (MPAA) rating system.

The following Table 1 reports the different parental control levels (PCL) the player can be set to. The highest PCL = 8 relates to adult contents, while the lowest PCL = 1 relates to kid safe contents.

**Table 1 : MPAA Rating**

| **MPAA Rating** | **Parental Control Level (PCL)** | **General Description** |
|---|---|---|
| | 8 | Unrated (most restricted audience) |
| NC-17 | 7 | NC-17 Adult theme or content, not suitable for children under 17 |
| R | 6 | Restricted (mature audience) |
| | 5 | Mature teenage audience |
| PG-13 | 4 | Parental guidance suggested, unsuitable for children under 13 (teenage audience) |
| PG | 3 | Parental guidance suggested (mature young audience) |
| | 2 | Most audiences |
| G | 1 | Suitable for general audiences (general, unrestricted audience) |

This parental control access step is used for controlling the access to the content of an information carrier 105 (and as a consequence a control access to the specific Websites linked to this DVD). The step 105 is similar to a switch controlled by a control signal derived from a comparison between the parental control level of the disc (designated by DVD_PCL) and the current parental control level (designated by Current_PCL_i) set in the player 101. A user can access the disc content (and also to the specific Websites linked to this DVD) only if Current_PCL_i is higher than or equal to DVD_PCL. The index i corresponds to one of the MPPA rating values as defined in Table 1.

The method according to the invention comprises an association step 106 for associating a list of server addresses with each PCL :
- the list of server addresses List_8 is associated with PCL having value 8 (designated by PCL_8),
- the list of server addresses List_1 is associated with PCL having value 1 (designated by PCL_1),
- etc ...
   Generally speaking, the list of server addresses List_i is associated with PCL having value i (designated by PCL_i).

Each list List_i comprises a set of server addresses set by the people having the right to set the parameters of the player 101. For example, such a setting may be done by entering a PIN code and/or a password. The lists of servers may be defined manually via the user interface 108 (for example from a keyboard), or loaded from an external specific database 107 located in a Website or stored in an information carrier read by the player 101.

The list List_i of server addresses associated with the current parental control level Current_PCL_i advantageously includes the lists of server addresses associated with the parental control levels of lower level.

Server addresses correspond for example to Website addresses or to FTP addresses.

The method according to the invention also comprises a control step 109 for restricting the user access to the list of server addresses List_i associated with said current parental control level Current_PCL_i. This control step 109 is similar to a selector which connects the player 101 and the network 102 only for server addresses of the list which is associated with the parental control level PCL_i having the same rating i as the current parental control level Current_PCL_i.

The method according to the invention may also comprise a first control sub-step 110 for deactivating said control step. This sub-step 110 is similar to a selector controlled by a first control signal 111 generated by the user interface 108. For example, this control signal 111 is generated by the user in charge of setting the parameters of the player 101. This selector is either connected to the control step 109 for receiving the server addresses stored in the list List_i, or connected to the user interface 108. In this latter case, the user can access any server address he wants, for example by typing the server address via a keyboard.

The method according to the invention may also comprise a second control sub-step 112 for forbidding the user access to any server address. This sub-step 112 is similar to a switch controlled by a second control signal 113 generated by the user interface 108. For example, this control signal 113 is generated by the user in charge of setting the parameters of the player 101. When closed, this switch allows to apply the control access performed by step 109 to Web browsing, whereas the access to Websites becomes impossible when this switch is opened.

The player 101 is associated with a display 114 in charge of displaying the content of the accessed server, but also the content of the DVD disc 105 and the data of a specific server linked to this disc.

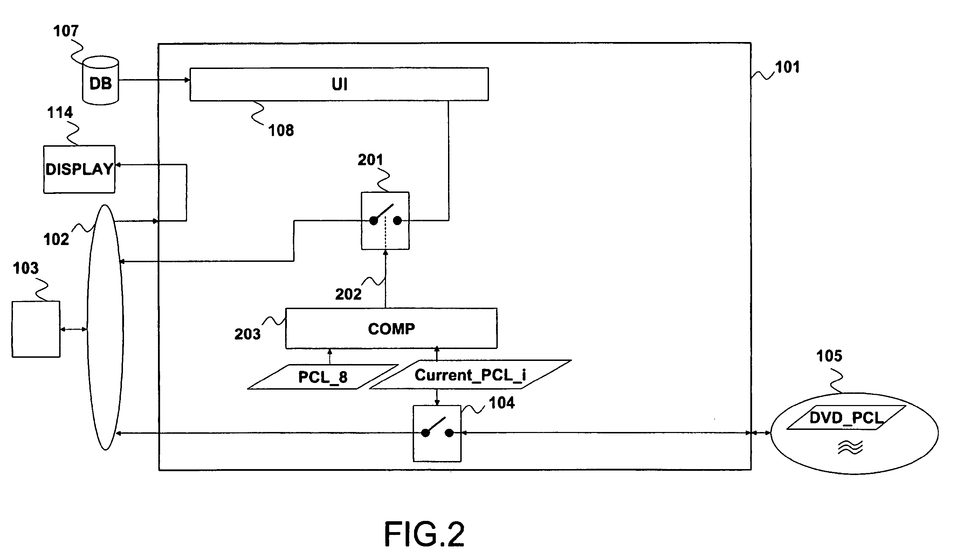

Fig.2 depicts a second method according to the invention of controlling a user access to a server content.

This method comprises a control step 201 for blocking the user access to a server content. This control step 201 is similar to a switch controlled by a control signal 202 generated by a comparison step 203. The comparison step 203 performs a comparison between the current parental control level Current_PCL_i and the highest parental control level PCL_8.

If Current_PCL_i < PCL_8, it may be assumed that the player 101 is intended to be accessed by young people. In that case, the comparison step 203 generates a control signal 202 having a first state which opens the switch 201. As a consequence, the user cannot access any server addresses.

If Current_PCL_i = PCL_8, it may be assumed that the player 101 is intended to be accessed only by adults. In that case, the comparison step 203 generates a control signal 202 having a second state which closes the switch 201. The user can thus access any server addresses, for example by entering the server addresses from the user interface 108.

The methods of controlling according to the invention may be implemented in an information carrier player, such as a DVD player, or in any portable apparatus comprising a DVD player (PDA, mobile phone ...).

Such methods may be implemented by means of hardware elements (such as wired electronic circuits, memories, signal processors ...), or alternatively by means of software elements such as computer programs comprising code instructions stored in a memory device, said code instructions being executed by a signal processor.

The words "comprise", "comprises" and "comprising" do not exclude the presence of elements other than those listed in the claims.

## Claims

1. A method of controlling a user access, from an information carrier player (101), to an information carrier (105), said information carrier (105) being associated with a preset parental control level (DVD_PCL), said information carrier player (101) being associated with a current parental control level (Current_PCL_i) selected from among a set of parental control levels (PCL_i), said method of controlling comprising:
- a switching step (104) controlled by a control signal derived from a comparison between said current parental control level (Current_PCL_i) and said preset parental control level (DVD_PCL), for authorizing or not the access to said information carrier (105),
**characterized in that** the method comprises
- an association step (106) for associating a list (List_i) of server addresses with said parental control levels (PCL_i),
- a control step (109) for restricting the user access to a server content according to the list (List_i) of server addresses associated with said current parental control level (Current_PCL_i).

2. A method as claimed in claim 1, comprising a first control sub-step (110) for deactivating said control step (109).

3. A method as claimed in claim 1 or 2, comprising a second control sub-step (112) for forbidding the user access to any server address.

4. An information carrier player (101) intended to read an information carrier (105) which is associated with a preset parental control level (DVD_PCL), said information carrier player (101) being associated with a current parental control level (Current_PCL_i) selected from among a set of parental control levels (PCL_i), said information carrier player(101) comprising:
- switching means (104) controlled by a control signal derived from a comparison between said current parental control level (Current_PCL_i) and said preset parental control level (DVD_PCL), for authorizing or not the reading of said information carrier (105),
**characterized in that** the information carrier player (101) comprises
- association means (106) for associating a list (List_i) of server addresses with said parental control levels (PCL_i),
- control means (109) to control a user access to a server (103) for restricting the user access to the list (List_i) of server addresses associated with said current parental control level (Current_PCL_i).

5. A method of controlling a user access, from an information carrier player (101), to an information carrier (105), said information carrier (105) being associated with a preset parental control level (DVD_PCL), said information carrier player (101) being associated with a current parental control level (Current_PCL_i) selected from among a set of parental control levels (PCL_i), said method of controlling comprising:
- a switching step (104) controlled by a control signal derived from a first comparison between said current parental control level (Current_PCL_i) and said preset parental control level (DVD_PCL), for authorizing or not the access to said information carrier (105),
**characterized in that** the method comprises
- a control step (201) for blocking the user access to a server content, said control step (201) being controlled by a second control signal (202) based on a second comparison between said current parental control level (Current_PCL_i) and the highest parental control level (PCL_8) of said set of parental control levels, for authorizing or not the access to said server (103).

6. An information carrier player (101) intended to read an information carrier (105) which is associated with a preset parental control level (DVD_PCL), said information carrier player (101) being associated with a current parental control level (Current_PCL_i) selected from among a set of parental control levels (PCL_i), said information carrier player (101) comprising:
- switching means (104) controlled by a control signal derived from a comparison between said current parental control level (Current_PCL_i) and said preset parental control level (DVD_PCL), for authorizing or not the reading of said information carrier (105), **characterized in that** the information carrier player (101) comprises
- control means (201) for blocking the user access to a server content, said control means (201) being controlled by a second control signal (202) based on a second comparison between said current parental control level (Current_PCL_i) and the highest parental control level (PCL_8).

7. A computer program comprising code instructions for implementing the steps of the method as claimed in claims 1, 2 or 3.

8. A computer program comprising code instructions for implementing the steps of the method as claimed in claim 5.

## Patentansprüche

1. Verfahren zur Steuerung eines Anwenderzugriffs von einem Informationsträgerspieler (101) zu einem Informationsträger (105) wobei der genannte Informationsträger (105) mit einem voreingestellten elterlichen Steuerpegel (DVD_PCL), wobei der genannte Informationsträgerspieler (101) mit einem aktuellen elterlichen Steuerpegel (Current_PCL_i), selektiert aus einem Satz elterlicher Steuerpegel (PCL_i) assoziiert ist, wobei das genannte Steuerverfahren die nachfolgenden Verfahrensschritte umfasst:
- einen Umschaltschritt (104), gesteuert mit Hilfe eines Steuersignals, hergeleitet aus einem Vergleich zwischen dem genannten aktuellen elterlichen Steuerpegel (Current_PCL_i) und dem genannten voreingestellten elterlichen Steuerpegel (DVD_PCL), zur etwaigen Autorisation des Zugriffs auf den genannten Informationsträger (105),
**dadurch gekennzeichnet, dass** das Verfahren die nachfolgenden Verfahrensschritte umfasst;
- einen Assoziationsschritt (106) zum Assoziieren einer Liste (List_i) mit Serveradressen mit den genannten elterlichen Steuerpegeln (PCL_i),
- einen Steuerschritt (109) zum Beschränken des Anwenderzugriffs auf einen Serverinhalt entsprechend der Liste (List_i) mit Serveradressen, assoziiert mit dem aktuellen elterlichen Steuerpegel (Current_PCL_i).

2. Verfahren nach Anspruch 1 mit einem ersten Steuerhilfsschritt (110) zum Deaktivieren des genannten Steuerschrittes (109).

3. Verfahren nach Anspruch 1 oder 2, mit einem zweiten Steuerhilfsschritt (112) zum Sperren des Anwenderzugriffs auf alle Serveradressen.

4. Informationsträgerspieler (101) zum Auslesen eines Informationsträgers (105), der mit einem voreingestellten elterlichen Steuerpegel (DVD_PCL) assoziiert ist, wobei der genannte Informationsträgerspieler (101) mit einem aktuellen elterlichen Steuerpegel (Current_PCL_i), selektiert aus einem Satz elterlicher Steuerpegel (PCL_i) assoziiert ist, wobei der genannte Informationsträgerspieler (101) die nachfolgenden Elemente umfasst:
- Umschaltmittel (104), gesteuert durch ein Steuersignal, hergeleitet aus einem Vergleich zwischen dem genannten aktuellen elterlichen Steuerpegel (Current_PCL_i) und dem genannten voreingestellten elterlichen Steuerpegel (DVD_PCL), zur etwaigen Autorisation des genannten Informationsträgers (105),
**dadurch gekennzeichnet, dass** der Informationsträgerspieler (101) die nachfolgenden Elemente umfasst:
- Assoziationsmittel (106) zum Assoziieren einer Liste (List_i) von Serveradressen mit den genannten elterlichen Steuerpegeln (PCL_i),
- Steuermittel (109) zur Steuerung eines Anwenderzugriffs auf einen Server (103) zur Beschränkung des Anwenderzugriffs auf die Liste (List_i) mit Serveradressen, assoziiert mit dem genannten aktuellen elterlichen Steuerpegel (Current_PCL_i).

5. Verfahren zur Steuerung eines Anwenderzugriffs von einem Informationsträgerspieler (101) zu einen Informationsträger (105), wobei der genannte Informationsträger (105) mit einem voreingestellten elterlichen Steuerpegel (DVD_PCL) assoziiert ist, wobei der genannte Informationsträgerspieler (101) mit einem aktuellen elterlichen Steuerpegel (Current_PCL_i), selektiert aus einem Satz elterlicher Steuerpegel (PCL_i) assoziiert ist, wobei das genannte Steuerverfahren den nachfolgenden Verfahrensschritt umfasst:
- einen Umschaltschritt (104), gesteuert durch ein Steuersignal, hergeleitet von einem ersten Vergleich zwischen dem genannten aktuellen elterlichen Steuerpegel (Current_PCL_i) und dem genannten voreingestellten elterlichen Steuerpegel (DVD_PCL), zur etwaigen Autorisation des Zugriffs auf den genannten Informationsträger (105),
**dadurch gekennzeichnet, dass** das Verfahren weiterhin die nachfolgenden Verfahrensschritte umfasst:
- einen Steuerschritt (201) zum Sperren des Anwenderzugriffs auf einen Serverinhalt, wobei der genannte Steuerschritt (201) durch ein zweites Steuersignal (202) auf Basis eines zweiten Vergleichs zwischen dem genannten aktuellen elterlichen Steuerpegel (Current_PCL_i) und dem höchsten elterlichen Steuerpegel (PCL_8) des genannten Satzes elterlicher Steuerpegel gesteuert wird, und zwar zur etwaigen Autorisation des Zugriffs auf den genannten Server (103).

6. Informationsträgerspieler (101) zum Auslesen eines Informationsträgers (105), der mit einem voreingestellten elterlichen Steuerpegel (DVD_PCL) assoziiert ist, wobei der genannte Informationsträgerspieler (101) mit einem aktuellen elterlichen Steuerpegel (Current_PCL_i), selektiert aus einem Satz elterlicher Steuerpegel (PCL_i) assoziiert ist, wobei der genannte Informationsträgerspieler (101) die nachfolgenden Mittel umfasst:
- Umschaltmittel (104), gesteuert durch ein Steuersignal, hergeleitet von einem Vergleich zwischen dem genannten aktuellen elterlichen Steuerpegel (Current_PCL_i) und dem genannten voreingestellten elterlichen Steuerpegel (DVD_PCL), und zwar zur etwaigen Autorisation zum Auslesen des genannten Informationsträgers (105), **dadurch gekennzeichnet, dass** der Informationsträgerspieler (101) die nachfolgenden Mittel umfasst:
- Steuermittel (201) zum Sperren des Anwenderzugriffs auf einen Serverinhalt, wobei die genannten Steuermittel (201) durch ein zweites Steuersignal (202) auf Basis eines zweiten Vergleichs zwischen dem genannten aktuellen elterlichen Steuerpegel (Current_PCL_i) und dem höchsten elterlichen Steuerpegel (PCL_8) gesteuert wird.

7. Computerprogramm mit Codeinstruktionen zum Implementieren der Verfahrensschritte des Verfahrens nach den Ansprüchen 1, 2 oder 3.

8. Computerprogramm mit Codeinstruktionen zum Implementieren der Verfahrensschritte des Verfahrens nach Anspruch 5.

## Revendications

1. Procédé destiné à contrôler un accès d'utilisateurs, à partir d'un lecteur de support d'informations (101), à un support d'informations (105), ledit support d'informations (105) étant associé à un niveau de contrôle parental préréglé (DVD_PCL), ledit lecteur de support d'informations (101) étant associé à un niveau de contrôle parental actuel (Current_PCL_i) sélectionné parmi un ensemble de niveaux de contrôle parental (PCL_i), ledit procédé de contrôle comprenant :
- une étape de commutation (104) commandée par un signal de commande dérivé d'une comparaison entre ledit niveau de contrôle parental actuel (Current_PCL_i) et ledit niveau de contrôle parental préréglé (DVD_PCL), pour autoriser ou non l'accès au dit support d'informations (105),
**caractérisé en ce que** le procédé comprend :
- une étape d'association (106) pour associer une liste (List_i) d'adresses de serveurs aux dits niveaux de contrôle parental (PCL_i),
- une étape de commande (109) pour restreindre l'accès d'utilisateurs à un contenu de serveur en fonction de la liste (List_i) d'adresses de serveurs associées au dit niveau de contrôle parental actuel (Current_PCL_i).

2. Procédé selon la revendication 1, comprenant une première sous-étape de commande (110) pour désactiver ladite étape de commande (109).

3. Procédé selon la revendication 1 ou 2, comprenant une deuxième sous-étape de commande (112) pour interdire l'accès d'utilisateurs à toute adresse de serveur.

4. Lecteur de support d'informations (101) destiné à lire un support d'informations (105) qui est associé à un niveau de contrôle parental préréglé (DVD_PCL), ledit lecteur de support d'informations (101) étant associé à un niveau de contrôle parental actuel (Current_PCL_i) sélectionné parmi un ensemble de niveaux de contrôle parental (PCL_i), ledit lecteur de support d'informations (101) comprenant :
- des moyens de commutation (104) commandés par un signal de commande dérivé d'une comparaison entre ledit niveau de contrôle parental actuel (Current_PCL_i) et ledit niveau de contrôle parental préréglé (DVD_PCL), pour autoriser ou non la lecture dudit support d'informations (105),
**caractérisé en ce que** le lecteur de support d'informations (101) comprend :
- des moyens d'association (106) pour associer une liste (List_i) d'adresses de serveurs aux dits niveaux de contrôle parental (PCL_i),
- des moyens de commande (109) pour commander un accès d'utilisateurs à un serveur (103) pour restreindre l'accès d'utilisateurs à la liste (List_i) d'adresses de serveurs associées au dit niveau de contrôle parental actuel (Current_PCL_i).

5. Procédé destiné à contrôler un accès d'utilisateurs, à partir d'un lecteur de support d'informations (101), à un support d'informations (105), ledit support d'informations (105) étant associé à un niveau de contrôle parental préréglé (DVD_PCL), ledit lecteur de support d'informations (101) étant associé à un niveau de contrôle parental actuel (Current_PCL_i) sélectionné parmi un ensemble de niveaux de contrôle parental (PCL_i), ledit procédé de contrôle comprenant :
- une étape de commutation (104) commandée par un signal de commande dérivé d'une première comparaison entre ledit niveau de contrôle parental actuel (Current_PCL_i) et ledit niveau de contrôle parental préréglé (DVD_PCL), pour autoriser ou non l'accès au dit support d'informations (105),
**caractérisé en ce que** le procédé comprend :
- une étape de commande (201) pour bloquer l'accès d'utilisateurs à un contenu de serveur, ladite étape de commande (201) étant commandée par un deuxième signal de commande (202) sur la base d'une deuxième comparaison entre ledit niveau de contrôle parental actuel (Current_PCL_i) et le plus haut niveau de contrôle parental (PCL_8) dudit ensemble de niveaux de contrôle parental, pour autoriser ou non l'accès au dit serveur (103).

6. Lecteur de support d'informations (101) destiné à lire un support d'informations (105) qui est associé à un niveau de contrôle parental préréglé (DVD_PCL), ledit lecteur de support d'informations (101) étant associé à un niveau de contrôle parental actuel (Current_PCL_i) sélectionné parmi un ensemble de niveaux de contrôle parental (PCL_i), ledit lecteur de support d'informations (101) comprenant :
- des moyens de commutation (104) commandés par un signal de commande dérivé d'une comparaison entre ledit niveau de contrôle parental actuel (Current_PCL_i) et ledit niveau de contrôle parental préréglé (DVD_PCL), pour autoriser ou non la lecture dudit support d'informations (105), **caractérisé en ce que** le lecteur de support d'informations (101) comprend :
- des moyens de commande (201) pour bloquer l'accès d'utilisateurs à un contenu de serveur, lesdits moyens de commande (201) étant commandés par un deuxième signal de commande (202) sur la base d'une deuxième comparaison entre ledit niveau de contrôle parental actuel (Current_PCL_i) et le plus haut niveau de contrôle parental (PCL_8).

7. Programme d'ordinateur comprenant des instructions de code pour mettre en oeuvre les étapes du procédé selon les revendications 1, 2 ou 3.

8. Programme d'ordinateur comprenant des instructions de code pour mettre en oeuvre les étapes du procédé selon la revendication 5.
